# EUROPÄISCHE PATENTSCHRIFT

(11) **EP 2 762 684 B1**
(45) Veröffentlichungstag und Bekanntmachung des Hinweises auf die Patenterteilung: **03.03.2021**
(21) Anmeldenummer: 13153184.0
(22) Anmeldetag: 30.01.2013
(51) Int. Cl.: F01D 9/04, F01D 11/00

(54) **DICHTUNGSTRÄGER AUS TITANALUMINID FÜR EINE STRÖMUNGSMASCHINE**
SEAL MOUNT MADE FROM TITANIUM ALUMINIDE FOR A FLOW MACHINE
SUPPORT D'ÉTANCHÉITÉ À BASE D'ALUMINURE DE TITANE POUR UNE TURBOMACHINE

(43) Veröffentlichungstag der Anmeldung: 06.08.2014
(73) Patentinhaber: MTU Aero Engines AG, 80995 München (DE)
(72) Erfinder: Stiehler, Frank, 04924 Bad Liebenwerda (DE); Klän, Stephan, 80469 München (DE); Busam, Stefan, 86928 Greifenberg (DE); Theis, Bernhard, 81543 München (DE)

(56) Entgegenhaltungen:
- EP-A2- 2 060 741
- DE-A1-102006 004 090
- US-A1- 2011 193 293

## Beschreibung

### HINTERGRUND DER ERFINDUNG

### GEBIET DER ERFINDUNG

Die vorliegende Erfindung betrifft eine Strömungsmaschine, wie beispielsweise eine stationäre Gasturbine oder ein Flugtriebwerk, bzw. einen Dichtungsträger und dessen Herstellung für den Einsatz im Bereich des sogenannten Inner-Air-Seal (IAS) einer Strömungsmaschine.

### STAND DER TECHNIK

Strömungsmaschinen, wie stationäre Gasturbinen und Flugtriebwerke sind seit langem bekannt und werden in vielfältiger Weise eingesetzt. Derartige Strömungsmaschinen weisen einen ringförmigen Strömungskanal auf, in welchem drehbare Laufschaufeln und stationäre Leitschaufeln in Form von Laufschaufelkränzen und Leitschaufelkränzen angeordnet sind. Durch die Anordnung der Laufschaufel- und Leitschaufelkränze wird im Bereich des Verdichters die einströmende Luft verdichtet und im Bereich der Turbine kann durch das ausströmende Heißgas aus der Brennkammer die Strömungsmaschine angetrieben werden. Zur Erzielung eines hohen Wirkungsgrades wird die den Strömungskanal umgebende Gehäusestruktur möglichst so ausgebildet, dass im besten Fall das gesamte, die Strömungsmaschine durchfließende Fluid im Strömungskanal an den Leit- und Laufschaufeln vorbeiströmen muss und radiale Gasverluste vermieden werden. Entsprechend ist es bekannt in der Gehäusestruktur sogenannte Inner- und Outer-Air-Seals als radial innen und radial außen liegende Dichtungen für das Strömungsfluid vorzusehen.

Beispiele für Dichtungen gemäß dem Oberbegriff des Anspruchs 1 sind in den Dokumenten DE102006004090A1, US2011/193293A1 und EP2060741A2 angegeben.

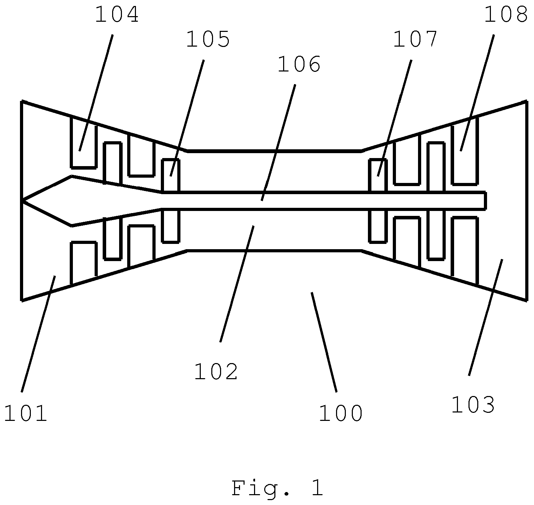

Für den Turbinenbereich ist in der DE 10 2008 048 006 A1 ein Beispiel für eine Dichtungsanordnung im Bereich des Inner-Air-Seal (IAS) beschrieben, das auch in der beigefügten Figur 1 dargestellt ist. Die Fig. 1 zeigt hierbei in einem Schnitt entlang der axialen Richtung der Strömungsmaschine eine erste Laufschaufelreihe 1 sowie einen Leitschaufelkranz 2 und eine weitere Laufschaufelreihe 3. An den Laufschaufeln ist ein inneres Deckband 5 angeordnet und an den Leitschaufeln ein inneres Deckband 4, die zusammen die radial innere Begrenzungswand des Strömungskanals bilden. Durch die zwischen den Lauf- und Leitschaufeln gegebenen Spalte kann jedoch Heißgas aus dem Strömungskanal radial entweichen, sodass in der radial inneren Gehäusestruktur eine Dichtungsanordnung vorgesehen ist, deren Dichtung 8 an den Schaufelfüßen 6 der Leitschaufeln 2 mit einem Dichtungsträger 7 angeordnet ist.

An dem Dichtungsträger 7 ist zum einen ein sogenanntes Deckelelement 9 vorgesehen, welches mit einem axial hervorstehenden Bereich des Laufschaufelkranzes 1 eine sogenannte Labyrinthdichtung bildet, um unmittelbares Eindringen von Heißgas aus dem Strömungskanal in den Hohlraum der Gehäusestruktur zu vermeiden. Darüber hinaus ist an dem Dichtungsträger 7 eine Wabendichtung 8 vorgesehen, welche im Eingriff mit einer sich mit dem Laufschaufelkranz 3 mitdrehenden Dichtungsstruktur 10 ist.

Obwohl eine derartige Dichtung im Bereich der radial inneren Gehäusestruktur ihre Dichtungsaufgaben zuverlässig erfüllt, besteht weiter Verbesserungsbedarf, da insbesondere bei Flugtriebwerken ein beständiges Ziel darin besteht, das Gewicht der Strömungsmaschine zu reduzieren.

### OFFENBARUNG DER ERFINDUNG

### AUFGABE DER ERFINDUNG

Es ist deshalb Aufgabe der vorliegenden Erfindung eine Strömungsmaschine und insbesondere einen Dichtungsträger für ein Inner-Air-Seal (IAS) bereitzustellen, welche eine sichere und zuverlässige Abdichtung der radial inneren Gehäusestruktur gegenüber Heißgas aus dem Strömungskanal des Turbinenbereichs der Strömungsmaschine gewährleistet, aber eine Gewichtsreduzierung der Strömungsmaschine ermöglicht.

### TECHNISCHE LÖSUNG

Diese Aufgabe wird gelöst mit einer Strömungsmaschine mit den Merkmalen des Anspruchs 1 sowie einem Verfahren zur Herstellung eines Dichtungsträgers mit den Merkmalen des Anspruchs 9. Vorteilhafte Ausgestaltungen sind Gegenstand der abhängigen Ansprüche.

Die vorliegende Erfindung schlägt vor, den Dichtungsträger für die Dichtung einer Inner-Air-Seal aus einem intermetallischen Werkstoff, insbesondere einem TiAl - Werkstoff herzustellen, da intermetallische Werkstoffe und besonders TiAl - Werkstoffe ein niedriges spezifisches Gewicht aufweisen, aber gleichzeitig die Anforderungen an Temperaturbeständigkeit und Festigkeit erfüllen können, um so das Gewicht einer Strömungsmaschine und insbesondere eines Flugtriebwerks zu reduzieren. Insbesondere schlägt die vorliegende Erfindung vor, den Dichtungsträger zunächst zu einem Halbzeug zu gießen oder zu schmieden, um anschließend Randzonen des Halbzeugs vollständig zu entfernen, wobei insbesondere eine mechanische Bearbeitung, wie eine spanabhebende Bearbeitung eingesetzt werden kann. Dadurch können kritische Randzonen des Materials abgetragen werden und es kann eine definierte einheitliche Oberfläche erzeugt werden, die eine hundertprozentige Bauteilprüfung ermöglicht. Auf diese Weise kann den Sicherheitsaspekten für einen sicheren und zuverlässigen Betrieb der Strömungsmaschine Rechnung getragen werden.

Unter einem intermetallischen Werkstoff wird ein Werkstoff verstanden, der mindestens eine intermetallische Phase in seinem Gefüge aufweist, wobei insbesondere der überwiegende Anteil (bezogen auf das Volumen oder Gewicht) des Gefüges aus intermetallischen Phasen gebildet wird. Insbesondere kann der intermetallische Werkstoff nahezu vollständig aus einer oder mehreren intermetallischen Phasen aufgebaut sein, wenn beispielsweise die intermetallischen Phasen einen hohen Homogenitätsbereich im Phasendiagramm aufweist, so dass in einem weiten Bereich Legierungsbestandteile aufgenommen werden können. Beispiele hierfür sind Werkstoffe auf Basis von Titanaluminiden, die bei der vorliegenden Erfindung bevorzugt eingesetzt werden können.

Unter intermetallischen Phasen wird eine homogene chemische Verbindung aus zwei oder mehr Metallen verstanden, die neben einer reinen metallischen Bindung Anteile weiterer Bindungsarten, wie kovalente Bindungen oder Ionenbindungen, also keramischer Bindungstypen, aufweisen, was in einer besonders hohen Festigkeit der Gitterstruktur und somit des Materials resultiert. Titanaluminide, aber auch Eisenaluminide oder andere intermetallische Werkstoffe weisen daher hohe Festigkeiten bei gleichzeitig niedrigem spezifischem Gewicht aus, und sind deshalb für die vorliegende Erfindung besonders, aber nicht ausschließlich geeignet.

Deshalb können für die vorliegende Erfindung TiAl - Werkstoffe zur Bildung des Dichtungsträgers eingesetzt werden. Unter einem TiAl - Werkstoff wird im Rahmen der vorliegenden Erfindung jeder Werkstoff verstanden, dessen anteilsmäßig größten Bestandteile Titan und Aluminium sind. Der TiAl - Werkstoff kann somit insbesondere aus einem Titanaluminid gebildet sein und ein Titanaluminid, wie beispielsweise y - TiAl oder α₂ - Ti₃A1 umfassen. Insbesondere kann es sich um eine TiAl - Legierung auf Basis eines Titanaluminids, wie beispielsweise von y - TiAl handeln, bei welchem geeignete Legierungsbestandteile zulegiert sind. Insbesondere kann es sich um eine sogenannte TNM- oder TNB-Legierung handeln, die Anteile an Niob und/oder Molybdän umfasst.

Der Dichtungsträger kann als einstückiger Ring oder mehrteilig aus mehreren Ringsegmenten gebildet werden, die dann zu einem Ring bzw. Kranz ähnlich dem Leitschaufelkranz zusammengesetzt werden.

Zur Anordnung an dem Leitschaufelkranz weist der Dichtungsträger an seinem radial äußeren Ende einen Verbindungsbereich auf, während am radial inneren Ende ein Anordnungsbereich zur Anordnung der Dichtung vorgesehen ist.

Als Dichtung kommen verschiedene Dichtungen in Frage, und zwar beispielsweise Wabendichtungen, die in dem Anordnungsbereich des Dichtungsträgers abgeschieden werden können. Alternativ ist es auch möglich eine Bürstendichtung vorzusehen, sodass im Anordnungsbereich ein entsprechendes Bürstenelement befestigt werden kann.

Zusätzlich kann der Dichtungsträger weitere Funktionalitäten aufweisen, wie beispielsweise einen weiteren Sperrabschnitt, um mit einem benachbarten Laufschaufelkranz das Eindringen von Heißgas in die Gehäusestruktur zu vermeiden. Hierzu kann zwischen dem radial inneren Ende und dem radial äußeren Ende des Dichtungsträgers ein axial vorstehender Sperrabschnitt ausgebildet sein, der zur Erhöhung des Fließwiderstandes für Heißgas eine stufenförmige Form mit mehreren S-förmigen Krümmungen aufweisen kann.

Bei der vorliegenden Beschreibung beziehen sich die Angaben radial und axial auf den Strömungskanal, sodass eine axiale Richtung entlang der Strömungsrichtung im Strömungskanal verläuft während eine radiale Richtung quer dazu verläuft.

Darüber hinaus wird bei den Bauteilen, die den Strömungskanal begrenzen, von einer Gehäusestruktur gesprochen, auch wenn die Komponenten, wie beispielsweise die Deckbänder der Leit- und Laufschaufeln, an den entsprechenden Leit- oder Laufschaufelkränzen angeordnet sind.

### KURZBESCHREIBUNG DER FIGUREN

Die beigefügten Zeichnungen zeigen in rein schematischer Weise in
- Fig. 1: eine Darstellung einer Strömungsmaschine, bei der die vorliegende Erfindung eingesetzt werden kann;
- Fig. 2: eine teilweise Schnittansicht eines erfindungsgemäßen Dichtungsträgers;
- Fig. 3: eine Schnittdarstellung ähnlich der Figur 2 einer weiteren Ausführungsform eines Dichtungsträgers;
- Fig. 4: eine Schnittdarstellung einer weiteren Ausführungsform eines Dichtungsträgers ähnlich den Figuren 2 und 3;
- Fig. 5: eine teilweise Seitenansicht der Anordnung aus Leitschaufel und Dichtungsträger aus Figur 4;
- Fig. 6: eine weitere Schnittdarstellung ähnlich den Figuren 2 bis 4 einer weiteren Ausführungsform eines Dichtungsträgers;
- Fig. 7: eine Seitenansicht der Anordnung aus Leitschaufelfuß und Dichtungsträger aus der Figur 6;
- Fig. 8: ein weiteres Ausführungsbeispiel eines Dichtungsträgers in einer Schnittansicht ähnlich den Darstellungen der Figuren 2,3,4 und 6;
- Fig. 9: eine Seitenansicht der Anordnung aus Leitschaufelfuß und Dichtungsträger aus Figur 8; und in
- Fig. 10: einen teilweisen Längsschnitt durch eine Strömungsmaschine entlang der axialen Richtung zur Darstellung eines Dichtungsträgers nach dem Stand der Technik.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt.

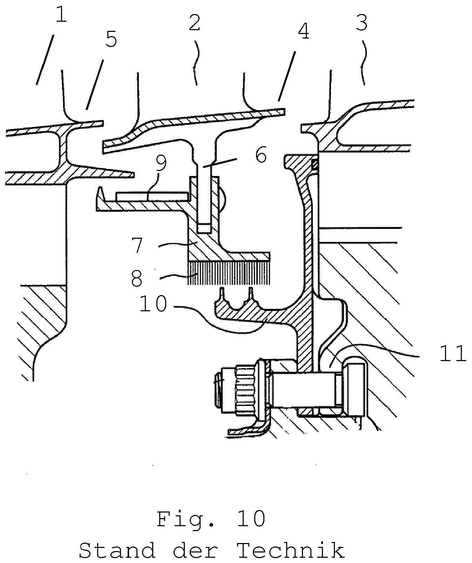

Die Figur 1 zeigt in einer rein schematischen Weise eine Darstellung einer Strömungsmaschine in Form einer Gasturbine 100 mit einem Kompressor bzw. Verdichter 101, einer Brennkammer 102 und einer Turbine 103. Im Verdichter 101 wird die angesaugte Luft durch die kranzförmig angeordneten Leitschaufeln 104 und Laufschaufeln 105 komprimiert und in die Brennkammer 102 gepresst, wo sie zusammen mit dem Treibstoff gezündet wird, sodass die aus der Brennkammer ausströmenden Verbrennungsgase in der Turbine die Laufschaufeln 106 antreiben können, die zwischen entsprechenden Leitschaufeln 108 an einer drehbaren Welle 106 angeordnet sind, welche gleichzeitig die Laufschaufeln 105 des Verdichters antreibt. Wie bereits im Zusammenhang mit der Figur 10 bei der Beschreibung des Stands der Technik angegeben worden ist, kann der erfindungsgemäße Dichtungsträger an Schaufelfüßen einer Leitschaufelreihe angeordnet sein, wie sie beispielsweise in Bezug auf die Gasturbine 100 beschrieben worden ist.

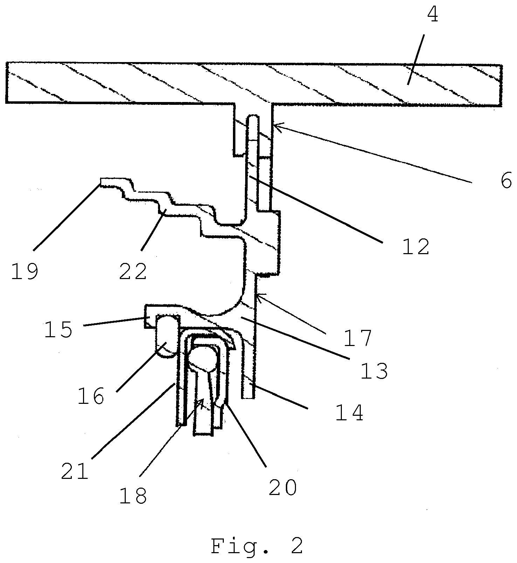

Die Fig. 2 zeigt einen Dichtungsträger 17 aus einem TiAl - Werkstoff, wie beispielsweise einer TiAl - Legierung auf Basis von y - Titanaluminid, der einstückig oder segmentweise als Ring ausgebildet ist, wobei die Darstellung der Fig. 2 lediglich einen Querschnitt durch einen Teil des Ringes zeigt.

Der Dichtungsträger 17 weist an seinem radial äußeren Ende einen Verbindungsbereich 12 auf, mit dem der Dichtungsträger 17 in mehreren Schaufelfüßen 6 der zu einem Leitschaufelkranz zusammen angeordneten Leitschaufeln angeordnet ist, wobei in der Fig. 2 auf die Darstellung der Leitschaufeln verzichtet worden ist und lediglich das innere Deckband 4 einer Leitschaufel bzw. des Leitschaufelkranzes gezeigt ist.

Am gegenüberliegenden inneren radialen Ende des Dichtungsträgers 17 ist ein Anordnungsbereich 13 vorgesehen, der zur Anordnung einer Dichtung 18 dient, welche mit einer rotierenden Dichtfläche eines benachbarten Laufschaufelkranzes zusammenwirkt. Die rotierende Dichtfläche (nicht gezeigt) kann in geeigneter Weise an dem Rotor bzw. der Scheibe des benachbarten Laufschaufelkranzes angeordnet sein.

Im gezeigten Ausführungsbeispiel der Fig. 2 ist die Dichtung 18 als Bürstendichtung ausgebildet, die über Hakenringe 20, 21 in dem Anordnungsbereich 13 des Dichtungsträgers 17 gehalten ist. Hierzu weist der Anordnungsbereich 13 einen Ringstutzen 14, der als Anschlagfläche für die Hakenringe 20, 21 bzw. die Dichtung 18 dient, sowie einen axial verlaufenden Halteabschnitt 15 auf, der zur Aufnahme eines Klemmrings 16 dient, der die Dichtung 18 mit den Hakenringen 20, 21 gegenüberliegend dem Ringstutzen 14 hält.

Anstelle der Bürstendichtung 18 kann jedoch am Anordnungsbereich 13 auch eine Wabendichtung 8, wie sie in Fig. 1 dargestellt ist, angeordnet werden. Hierzu kann im Anordnungsbereich 13 auf den Ringstutzen 14 verzichtet und der axial sich erstreckende Halteabschnitt 15 als Fläche zur Anordnung der Wabendichtung 8 dienen.

Zwischen dem radial äußeren Verbindungsbereich 12 und dem radial inneren Anordnungsbereich 13 ist bei der Ausführungsform des Dichtungsträgers 17 der Fig. 2 ein axial vorstehender Sperrabschnitt 19 ausgebildet, der zum Zusammenwirken mit einem entsprechend ausgebildeten Bauteil einer benachbarten Laufschaufelreihe vorgesehen ist, um ein direktes radiales Ausströmen des Heißgases aus dem Strömungskanal in die radial innere Gehäusestruktur zu verhindern.

Der radial vorstehende Sperrabschnitt ist bei dem gezeigten Ausführungsbeispiel der Fig. 2 stufenförmig ausgebildet und weist mehrere S-förmig gekrümmte Abschnitte 22 auf, um für daran vorbei strömendes Gas einen höheren Strömungswiderstand bereitzustellen.

Der Dichtungsträger 17 ist einstückig aus einem TiAl - Werkstoff, wie beispielsweise einer y - TiAl-Legierung mit Legierungsbestandteilen aus Niob und/oder Molybdän gefertigt, wobei die Herstellung über eine gießtechnische oder schmiedetechnische Route erfolgen kann. In beiden Fällen wird jedoch nach der Herstellung eines endkonturnahen Halbzeugs der Oberflächenbereich durch Bearbeitung entfernt, um kritische Randbereiche des Materials abzutragen, eine glatte und saubere Oberfläche bereit zu stellen und die Möglichkeit einer zuverlässigen Fehlerprüfung des Bauteils zu gewährleisten.

Damit ist es möglich leichte Titanaluminide als Dichtungsträger für eine Dichtung im Bereich der sogenannten Inner-Air-Seal (IAS) einer Strömungsmaschine einzusetzen, ohne die Sicherheitsanforderungen an einen zuverlässigen und fehlerfreien Betrieb der Strömungsmaschine zu beeinträchtigen.

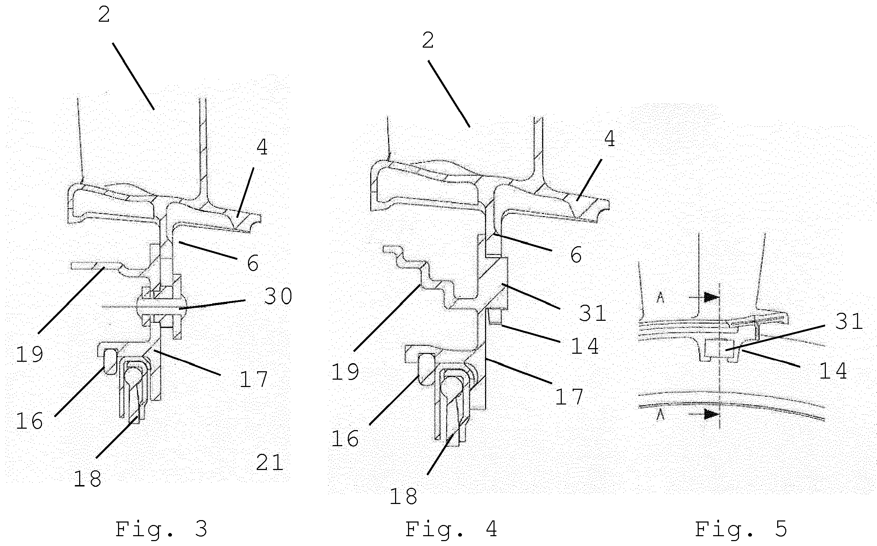

Die Figuren 3 bis 9 zeigen verschiedene Ausführungsformen eines Dichtungsträgers 17 und insbesondere die verschiedenen Möglichkeiten zur Anbringung eines entsprechenden Dichtungsträgers bzw. Dichtungsträgerrings an den Schaufelfüßen 6 von Leitschaufeln 2 bzw. einer Leitschaufelreihe, wobei geeignete Verbindungselemente integral in dem Dichtungsträger 17 ausgebildet sind. Da die Ausführungsformen des Dichtungsträgers der Figuren 3 bis 9 im Wesentlichen der Ausführungsform der Figur 2 entsprechen, sind gleiche oder ähnliche Komponenten mit identischen Bezugszeichen versehen und es wird auf eine wiederholte Beschreibung der identischen Komponenten verzichtet.

Die Figur 3 zeigt eine erste Ausführungsform zur Anordnung eines Dichtungsträgers 17 an Schaufelfüßen 6. Der Dichtungsträger 17 ist über mehrere über den Umfang des Dichtungsträgerrings verteilte Nietverbindungen 30 mit den Schaufelfüßen 6 verbunden, sodass sowohl in dem Dichtungsträger 17, als auch in den Schaufelfüßen 6 entsprechende Öffnungen zur Durchführung der Nieten vorgesehen sind.

Bei der Ausführungsform der Figuren 4 und 5 sind im Dichtungsträger 17 sogenannte Gleitsteine 31 integriert, von denen jeder durch eine beabstandet von dem Dichtungsträgerring angeordnete Platte gebildet ist, die einen Zwischenraum zwischen dem Ringhauptkörper und der Platte des Gleitsteins definiert, in die Vorsprünge 14 eines Schaufelfußes 6 eingreifen können, sodass eine axiale Sicherung gegeben ist. Bei dem gezeigten Ausführungsbeispiel der Figuren 4 und 5, wobei die Figur 5 die Schnittlinie A-A angibt, die in Figur 4 gezeigt ist, sind zwei Vorsprünge 14 vorgesehen, die links und rechts neben einer Verbindung der beabstandeten Platte zum Hauptring des Dichtungsträgers 17 angeordnet werden. Entlang des Umfangs des ringförmigen Dichtungsträgers 17 sind mehrere Gleitsteine 31 zur Anordnung der Laufschaufeln 2 an dem Dichtungsträgerring 17 vorgesehen.

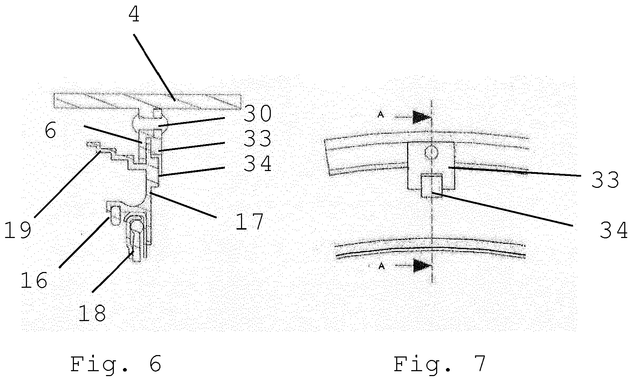

Bei der Ausführungsform der Figuren 6 und 7, bei denen in der Ansicht der Figur 7 wiederum die Schnittlinie A-A, die in Figur 6 dargestellt ist, angegeben ist, sind entlang des Umfangs des Dichtungsträgerrings 17 sogenannte Nutensteine 34 ausgebildet, in die Nutenplatten 33 eingreifen können, welche wiederum über jeweils eine Nietverbindung 30 mit dem Schaufelfuß 6 eines Leitschaufelkranzes verbunden sind. Durch die Nutenplatte 33 ist eine axiale Sicherung gegeben und durch die Nutensteine 34, die in die Nut der Nutenplatte 33 eingreifen, ist zusätzlich eine Verdrehsicherung in Richtung des Ringumfangs des Dichtungsträgerrings 17 gegeben.

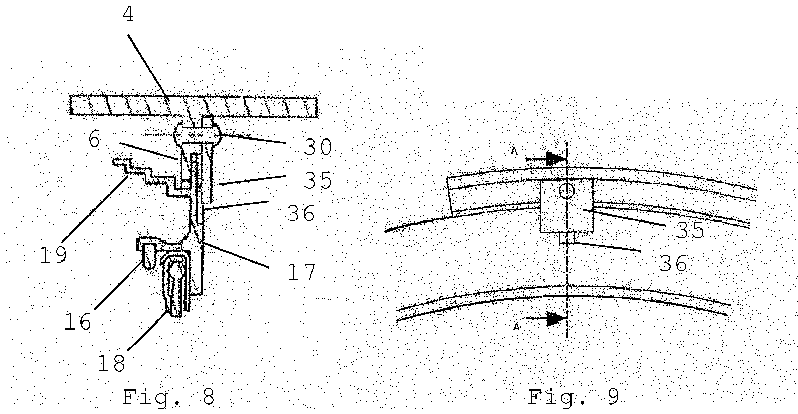

Bei der Ausführungsform der Figuren 8 und 9, bei denen wiederum die Figur 9 die Schnittlinie A-A angibt, die die Querschnittsansicht der Figur 8 bildet, sind Halteplatten 35 vorgesehen, die wiederum über eine Nietverbindung 30 am Schaufelfuß 6 angeordnet sind, wobei die Halteplatten 35 in Nuten 36 am Dichtungsträgerring 17 eingreifen, sodass auch hier sowohl eine axiale Sicherung, als auch eine Verdrehsicherung in Umfangsrichtung des Dichtungsträgerrings 17 gegeben ist.

Obwohl die vorliegende Erfindung anhand des Ausführungsbeispiels detailliert beschrieben worden ist, ist die Erfindung nicht auf dieses Ausführungsbeispiel beschränk, sondern es sind vielmehr Abwandlungen in der Weise möglich, dass einzelne Merkmale weggelassen oder andersartige Kombinationen von Merkmalen verwirklicht werden, sofern der Schutzbereich der beigefügten Ansprüche nicht verlassen wird. Die vorliegende Offenbarung umfasst sämtliche Kombinationen der vorgestellten Einzelmerkmale.

## Patentansprüche

1. Strömungsmaschine mit einem ringförmigen Strömungskanal und einer den Strömungskanal umgebenden Gehäusestruktur und einer Vielzahl von Leitschaufeln und Laufschaufeln, die in dem Strömungskanal angeordnet sind, wobei die Laufschaufeln drehbar in der Gehäusestruktur aufgenommen sind, während die Leitschaufeln in der Gehäusestruktur ortsfest sind, und wobei mehrere Leitschaufeln einen ringförmigen Leitschaufelkranz ausbilden, und wobei die Gehäusestruktur im Bereich der radial inneren Strömungskanalbegrenzung eine Dichtung (18) zur Abdichtung gegen Heißgasaustritt aus dem Strömungskanal aufweist, die über einen Dichtungsträger (17) an Leitschaufelfüßen der Leitschaufeln des Leitschaufelkranzes angeordnet ist und gegen eine drehbare Dichtfläche abdichtet,
wobei der Dichtungsträger (17) an einem radial äußeren Ende einen Verbindungsbereich (12) zur Anordnung an den Leitschaufelfüßen und am radial inneren Ende einen Anordnungsbereich (13) zur Anordnung der Dichtung (18) aufweist,
**dadurch gekennzeichnet, dass**
der Dichtungsträger (17) aus einem intermetallischen Werkstoff gebildet ist.

2. Strömungsmaschine nach Anspruch 1,
**dadurch gekennzeichnet, dass**
der intermetallische Werkstoff ein TiAl - Werkstoff ist und aus einem Titanaluminid gebildet ist oder ein Titanaluminid umfasst, insbesondere eine TNM - oder TNB - Legierung ist.

3. Strömungsmaschine nach Anspruch 1 oder 2,
**dadurch gekennzeichnet, dass**
der Dichtungsträger (17) gegossen oder geschmiedet und oberflächenbearbeitet ist.

4. Strömungsmaschine nach einem der vorhergehenden Ansprüche,
**dadurch gekennzeichnet, dass**
der Dichtungsträger (17) als einstückiger Ring oder mehrteilig aus mehreren Ringsegmenten ausgebildet ist.

5. Strömungsmaschine nach einem der vorhergehenden Ansprüche,
**dadurch gekennzeichnet, dass**
zwischen radial innerem Ende und radial äußerem Ende ein axial vorstehender Sperrabschnitt (19) ausgebildet ist.

6. Strömungsmaschine nach Anspruch 5,
**dadurch gekennzeichnet, dass**
der Sperrabschnitt (19) mindestens eine, vorzugsweise mehrere S-förmige Krümmungen aufweist.

7. Strömungsmaschine nach einem der vorhergehenden Ansprüche,
**dadurch gekennzeichnet, dass**
die Dichtung (18) eine Wabenstruktur ist.

8. Strömungsmaschine nach einem der Ansprüche 1 bis 6,
**dadurch gekennzeichnet, dass**
die Dichtung (18) eine Bürste ist.

9. Verfahren zur Herstellung eines Dichtungsträgers für eine Strömungsmaschine nach einem der vorhergehenden Ansprüche,
**dadurch gekennzeichnet, dass**
zunächst ein Halbzeug des Dichtungsträgers aus einem intermetallischen Werkstoff gegossen oder geschmiedet wird und anschließend Randzonen des Halbzeugs vollständig entfernt werden.

10. Verfahren nach Anspruch 9,
**dadurch gekennzeichnet, dass**
der intermetallische Werkstoff ein TiAl - Werkstoff ist

11. Verfahren nach Anspruch 9 oder 10,
**dadurch gekennzeichnet, dass**
die Entfernung der Randzonen durch mechanische Bearbeitung erfolgt.

## Claims

1. Turbomachine comprising an annular flow channel and a housing structure surrounding the flow channel, and a plurality of guide vanes and rotor blades which are arranged in the flow channel, the rotor blades being rotatably received in the housing structure, while the guide vanes are stationary in the housing structure, and a plurality of guide vanes forming an annular guide vane ring, and the housing structure, in the region of the radially inner flow channel boundary, having a seal (18) for sealing against hot gas exiting the flow channel, which seal is arranged on guide vane roots of the guide vanes of the guide vane ring via a seal carrier (17) and seals against a rotatable sealing surface, the seal carrier(17), at a radially outer end, having a connection region (12) for arrangement on the guide vane roots and, at a radially inner end, having an arrangement region (13) for arranging the seal (18), **characterized in that** the seal carrier (17) is formed from an intermetallic material.

2. Turbomachine according to claim 1, **characterized in that** the intermetallic material is a TiAl material and is formed from a titanium aluminide or comprises a titanium aluminide, in particular a TNM alloy or TNB alloy.

3. Turbomachine according to either claim 1 or claim 2, **characterized in that** the seal carrier (17) is cast or forged and surface-machined.

4. Turbomachine according to any of the preceding claims, **characterized in that** the seal carrier (17) is formed as a single-piece ring or in multiple parts from a plurality of ring segments.

5. Turbomachine according to any of the preceding claims, **characterized in that** an axially protruding blocking portion (19) is formed between the radially innerend and the radially outer end.

6. Turbomachine according to claim 5, **characterized in that** the blocking portion (19) has at least one, preferably a plurality of S-shaped curves.

7. Turbomachine according to any of the preceding claims, **characterized in that** the seal (18) is a honeycomb structure.

8. Turbomachine according to any of claims 1 to 6, **characterized in that** the seal (18) is a brush.

9. Method for producing a seal carrier for a turbomachine according to any of the preceding claims, **characterized in that** a semi-finished product of the seal carrier is first cast or forged from an intermetallic material, and edge zones of the semi-finished product are then completely removed.

10. Method according to claim 9, **characterized in that** the intermetallic material is a TiAl material.

11. Method according to either claim 9 or claim 10, **characterized in that** the edge zones are removed by mechanical machining.

## Revendications

1. Turbomachine comportant un canal d'écoulement annulaire et une structure de carter entourant le canal d'écoulement et une pluralité d'aubes directrices et d'aubes mobiles qui sont disposées dans le canal d'écoulement, les aubes mobiles étant logées en rotation dans la structure de carter, tandis que les aubes directrices sontfixes dans la structure de carter, et plusieurs aubes directrices réalisant une couronne annulaire d'aubes directrices, et la structure de carter présentant, dans la zone de la limite radialement intérieure du canal d'écoulement, un joint (18) destiné à assurer l'étanchéité contre les gaz chauds s'échappant du canal d'écoulement, lequel joint est disposé, par l'intermédiaire d'un support de joint (17), sur les pieds des aubes de guidage de la couronne d'aubes de guidage et assure l'étanchéité par rapport à une surface d'étanchéité en rotation,
le support de joint (17) présentant, à une extrémité radialement extérieure, une zone de liaison (12) destinée à l'agencement sur les pieds des a ubes de guidage, et à l'extrémité radialement intérieure, une zone d'agencement (13) destinée à l'agencement du joint (18),
**caractérisée en ce que**
le support de joint (17) est constitué d'un matériau intermétallique.

2. Turbomachine selon la revendication 1,
**caractérisée en ce que**
le matériau intermétallique est un matériau à base de TiAI et est constitué d'un aluminiure de titane ou comprend un aluminiure de titane, en particulier est un alliage de TNM ou de TNB.

3. Turbomachine selon la revendication 1 ou 2,
**caractérisée en ce que**
le support de joint (17) est coulé ou forgé et usiné en surface.

4. Turbomachine selon l'une des revendications précédentes,
**caractérisée en ce que**
le support de joint (17) est réalisé sous la forme d'un anneau d'une seule pièce ou de plusieurs segments d'anneau en plusieurs parties.

5. Turbomachine selon l'une des revendications précédentes,
**caractérisée en ce que**
une section de barrière (19) faisant saillie axialement est réalisée entre l'extrémité radialement intérieure et l'extrémité radialement extérieure.

6. Turbomachine selon la revendication 5,
**caractérisée en ce que**
la section de barrière (19) présente au moins une, de préférence plusieurs courbures en forme de S.

7. Turbomachine selon l'une des revendications précédentes,
**caractérisée en ce que**
le joint (18) est une structure en nid d'abeille.

8. Turbomachine selon l'une des revendications 1 à 6,
**caractérisée en ce que**
le joint (18) est une brosse.

9. Procédé de fabrication d'un support de joint destiné à une turbomachine selon l'une des revendications précédentes,
**caractérisé en ce que**
un produit semi-fini du support de joint est d'abord coulé ou forgé à partir d'un matériau intermétallique, puis les zones de bord du produit semi-fini sont entièrement éliminées.

10. Procédé selon la revendication 9,
**caractérisé en ce que**
le matériau intermétallique est un matériau à base de TiAl.

11. Procédé selon la revendication 9 ou 10,
**caractérisé en ce que**
l'élimination des zones de bord est effectuée par un traitement mécanique.
